Europäisches Patentamt

European Patent Office

Office européen des brevets

(11) Veröffentlichungsnummer: **0 406 574 A1**

# EUROPÄISCHE PATENTANMELDUNG

(21) Anmeldenummer: 90110688.0

(22) Anmeldetag: 06.06.90

(51) Int. Cl.5: **B23Q 23/00**

(30) Priorität: 06.07.89 DE 3922177

(43) Veröffentlichungstag der Anmeldung:
09.01.91 Patentblatt 91/02

(84) Benannte Vertragsstaaten:
AT BE CH DE DK ES FR GB GR IT LI LU NL SE

(71) Anmelder: MASCHINENFABRIK BERTHOLD
HERMLE AKTIENGESELLSCHAFT
Industriestrasse 8-12
D-7209 Gosheim(DE)

(72) Erfinder: Hermle, Harald

Griesweg 12
D-7201 Mahlstetten(DE)
Erfinder: Bernlöhr, Paul
Bubsheimerstrasse 6
D-7208 Spaichingen(DE)

(74) Vertreter: Vetter, Hans, Dipl.-Phys. Dr. et al
Patentanwälte Dipl.-Ing. Rudolf Magenbauer
Dipl.-Phys. Dr. Otto Reimold Dipl.-Phys. Dr.
Hans Vetter, Dipl.-Ing. Martin Abel,
Hölderlinweg 58
D-7300 Esslingen(DE)

(54) Vorrichtung zur Kompensation der Wärmeausdehnung an Werkzeugmaschinen.

(57) Es wird eine Vorrichtung zur Kompensation der Wärmeausdehnung in wenigstens einer Bewegungsrichtung an Werkzeugmaschinen vorgeschlagen. An wenigstens einem Maschinenteil, z.B. an einem Spindelschlitten (12), ist ein Maßstab (26) und an wenigstens einem weiteren Maschinenteil, z.B. am Ständer (11) einer Fräsmaschine, ist eine Leseeinrichtung (25) zur Erfassung der jeweiligen Relativposition der beiden relativ zueinander bewegbaren Maschinenteile vorgesehen, wobei der Maßstab (26) und/oder die Leseeinrichtung (25) an einem in der Bewegungsrichtung verlaufenden Dehnstab (22) mit hohem Wärmeausdehnungskoeffizienten befestigt ist. Der eine Flüssigkeitsleitung (23) aufweisende Dehnstab (22) bildet einen Teil eines Flüssigkeitskreislaufs der Werkzeugmaschine, vorzugsweise einen Teil des Schmierölkreislaufs. Auf diese Weise wird der Dehnstab mit sehr kurzer Zeitverzögerung und seht präzise auf der Temperatur des vom Schmieröl durchströmten Maschinenteils gehalten dessen Wärmeausdehnung kompensiert werden soll. Die Kompensation ist daher bei allen Betriebszuständen schnell und präzise insbesondere auch in der Aufwärmphase der Werkzeugmaschine.

Fig.1

## VORRICHTUNG ZUR KOMPENSATION DER WÄRMEAUSDEHNUNG AN WERKZEUGMASCHINEN

Die Erfindung betrifft eine Vorrichtung zur Kompensation der Wärmeausdehnung in wenigstens einer Bewegungsrichtung an Werkzeugmaschinen, mit einem Maßstab an wenigstens einem Maschinenteil und einer Leseeinrichtung für den Maßstab an wenigstens einem weiteren Maschinenteil zur Erfassung der jeweiligen Relativposition der relativ zueinander bewegbaren Maschinenteile, wobei der Maßstab und/oder die Leseeinrichtung an einem in der Bewegungsrichtung verlaufenden Dehnstab mit hohem Wärmeausdehnungskoeffizienten befestigt ist, und mit Mitteln für den Wärmeübergang von der Werkzeugmaschine zum Dehnstab.

An Werkzeugmaschinen entsteht durch die Schlittenbewegungen sowie durch rotierende Spindeln, Lager und Getriebeteile Reibungswärme, die mit zeitlicher Verzögerung eine Erwärmung und damit auch Dehnungen von Gehäusen und Schlitten bewirken. Diese Dehnungen führen entsprechend den jeweiligen Bauteilgrößen und Temperaturen zu erheblichen Beeinträch tigungen der Arbeitsgenauigkeit der Maschinen. Während der gesamten Aufwärmungsphase verändert sich der Fehler stetig und bleibt dann im stationären Zustand konstant. Allerdings können wechselnde Geschwindigkeiten und Drehzahlen sowie Pausen und Außentemperaturen wiederum die Dehnung und damit den Fehler beeinflussen.

Eine aus der DE-OS 31 16 827 bekannte Vorrichtung der eingangs genannten Gattung weist einen Dehnstab mit hohem Wärmeausdehnungskoeffizienten auf, der einseitig an einem Maschinenteil befestigt ist und am anderen Ende einen Maßstab trägt, wobei an einem anderen, relativ zu diesem Maschinenteil bewegbaren Maschinenteil eine Leseeinrichtung für den Maßstab angeordnet ist. Die Dehnung des Dehnstabs infolge der Erwärmung des Maschinenteils führt zu einer Verschiebung des Maßstabs und damit zur Kompensation der Wärmedehnung des Maschinenteils. Um auch in der Aufwärmphase eine möglichst gute Kompensation zu erzielen, sind Wärmeleitbolzen vorgesehen, die die Wärme vom Innern des Maschinenteils zum Dehnstab leiten, um diesen möglichst schnell auf die Temperatur der der Erwärmung besonders ausgesetzten Teile zu bringen.

Der Nachteil der bekannten Anordnung besteht darin, daß die Wärmeübertragung über Wärmeleitbolzen zu träge, d.h. verzögernd ansprechend, aufwendig und teuer ist und keine exakten Ergebnisse zuläßt, da die Wärmedehnung von mittleren Temperaturwerten abhängt, die mittels Wärmeleitbolzen schlecht erfaßbar sind. Darüber hinaus ist in wirtschaftlich vertretbarer Weise hierdurch nur eine Wärmeübertragung von Bereichen des jeweiligen Maschinenteils möglich, die sich in der Nähe des Dehnstabs befinden.

Beispielsweise können Temperaturänderungen an einer Spindel am Ende eines Maschinenschlittens nicht erfaßt werden.

Weiterhin ist aus der DE-OS 33 20 529 eine andere Kompensationseinrichtung bekannt, bei der die Dehnung des Schlitten-Gehäuses selbst ausgenutzt wird, wobei eine Schubstange mit geringer Wärmedehnung vorgesehen ist, die über einen Kipphebel mit ungleichen Armlängen den Maßstab zur Kompensation der Wärmedehnung verschiebt. Auch kann nur die Dehnung des Spindelschlittens an der betreffenden Stelle erfaßt werden, nicht dagegen angebaute Fräsköpfe oder weiter entfernte Bereiche mit anderen Temperaturen. Auch die langsame Erwärmung vom Inneren zum Äußeren des Schlittens führt hier zu einer verzögerten Kompensation.

Eine Aufgabe der vorliegenden Erfindung besteht daher darin, eine Vorrichtung der eingangs genannten Gattung zu schaffen, bei der auch in der Aufwärmphase und bei stark wechselnden Drehzahlen eine exakte Kompensation stattfindet, wobei für die Kompensation ohne wesentlichen technischen Aufwand alle Bereiche des jeweiligenMaschinenteils berücksichtigt werden können.

Diese Aufgabe wird erfindungsgemäß dadurch gelöst, daß der eine Flüssigkeitsleitung aufweisende Dehnstab einen Teil eines Flüssigkeitskreislaufs der Werkzeugmaschine bildet.

Versuche haben gezeigt, daß die Temperatur der Flüssigkeit des Flüssigkeitskreislaufs, also insbesondere die Schmieröltemperatur, bei allen Betriebsarten sehr genau analog der Wärmedehnung des durchflossenen Maschinenteils, also beispielsweise des Schlittens, verläuft. Durch die relativ schnell umgewälzte Flüssigkeit hat daher der Dehnstab ohne wesentliche Zeitverzögerung die Temperatur des jeweiligen Maschinenteils, so daß die Dehnung desselben exakt und schnell kompensiert werden kann. Da beispielsweise ein Schmierölkreislauf ohnehin im allgemeinen vorhanden ist und dieser die sich besonders erwärmenden Bereiche, nämlich die Lager, Zahnräder, Wellen u.dgl., erfaßt, ist der technische Aufwand gering, da der Dehnstab lediglich in den ohnehin vorhandenen Kreislauf geschaltet werden muß. Der Kreislauf umfaßt auch beispielsweise einen am Schlitten angeordneten Fräskopf, oder dieser kann zumindest in den Kreislauf einbezogen werden, um eine auch diesen erfassende Kompensation zu erzielen. Ein weiterer Vorteil besteht darin, daß der Dehnstab bzw. der Maßstab oder der Lesekopf nicht mehr direkt an der zu messenden Stelle angebracht werden muß, sondern auch an einer geschützten Stelle angebracht werden kann, das heißt außerhalb des Arbeitsraumes. Weiterhin können nach Bedarf mehrere Dehnstäbe an den Kreislauf angeschlossen werden, um die Wärmeausdehnung in mehreren Bewegungsrichtungen zu kompensieren. Dies wäre beispielsweise mit den bekannten Wärmeleitbolzen technisch kaum sinnvoll zu realisieren, wobei darüber hinaus diese Wärmeleitbolzen eine Reaktionszeit von 5 - 10 Minuten gegenüber einer Reaktionszeit von wenigen Sekunden beim Gegenstand der Erfindung aufweisen.

Durch die in den Unteransprüchen aufgeführten Maßnahmen sind vorteilhafte Weiterbildungen und Verbesserungen der im Anspruch 1 angegebenen Vorrichtung möglich.

Der Flüssigkeitskreislauf, der vorzugsweise der Kreislauf der Umlaufschmierung ist, wird wenigstens durch diejenigen Bereiche der Werkzeugmaschine oder eines Maschinenteils geführt, die für die Wärmeausdehnung maßgeblich sind. Dabei erstreckt sich dieser Kreislauf durch diese verschiedenen Bereiche jeweils mit Längen- und/oder Flächenanteilen, die den jeweiligen Anteilen an der Wärmeausdehnung entsprechen. Hierdurch kann auf einfache Weise eine Mittelung zwischen verschiedenen Temperaturen vorgenommen werden, die insgesamt zu einer exakten Erfassung der Gesamtlängendehnung bzw. Kompensation führt.

Um die Durchströmung des Dehnstabs mit der umlaufenden Flüssigkeit zu gewährleisten, weist dieser einen Flüssigkeitskanal auf oder er ist als Rohr ausgebildet. Der Flüssigkeitskanal oder das Rohr kann auch beispielsweise U-förmig ausgebildet sein, damit die beiden Anschlüsse des Flüssigkeitskanals an einem Ende des Dehnstabs angeordnet sind.

Der mit einem seiner Endbereiche am feststehenden oder bewegbaren Maschinenteil verankerte Dehnstab ist mit seinem anderen Endbereich mit dem Maßstab oder der Leseeinrichtung verbunden. Der Maßstab oder die Leseeinrichtung sind in vorteilhafter Weise zur Justierung über eine Justiereinrichtung am Dehnstab befestigt. Um die Lage des Dehnstabs festzulegen und gleichzeitig seine Wärmeausdehnung nicht zu behindern, ist er am freien Ende verschiebbar in einer Halterung geführt.

Der Dehnstab kann am Maschinengehäuse beabstandet oder daran anliegend, in Y-Richtung gleitend geführt sein, wobei dann zweckmäßigerweise ein Dauerschmierstoff dazwischen angeordnet ist, um ein Entlanggleiten am Maschinengehäuse infolge der Wärmedehnung zu gewährleisten.

Um Einflüsse auf die Temperatur des Dehnstabs von außen her möglichst klein zu halten, ist der Dehnstab wenigstens an seinen nicht am Maschinengehäuse anliegenden Seiten wärmeisoliert, vorzugsweise an all seinen Seiten.

Da der Dehnstab infolge des Flüssigkeitskreislaufs nicht an derjenigen Stelle befestigt zu sein braucht, deren Wärmedehnung er kompensieren soll, ergeben sich verschiedene konstruktive Alternativen:

a) Das eine Werkzeugaufnahme aufweisende bewegbare Maschinenteil, z.B. der Maschinenschlitten, trägt den Dehnstab, dessen freier Endbereich zur Werkzeugaufnahme, also z.B. zum Fräskopf hin, weist.

b) Das eine Werkzeugaufnahme aufweisende Maschinenteil ist bewegbar am anderen, den Dehnstab tragenden Maschinenteil, also z.B. am Maschinengehäuse, geführt, wobei der freie Endbereich des Dehnstabs von der Werkzeugaufnahme wegweist.

c) Das eine Werkstückaufnahme aufweisende bewegbare Maschinenteil, also z.B. ein horizontal und/oder vertikal verschiebbarer Werkstückschlitten, trägt den Dehnstab, dessen freier Endbereich zum feststehenden Haltebereich für eine Werkzeugaufnahme, also zum feststehenden Fräskopf hin, weist.

d) Das eine Werkstückaufnahme aufweisende Maschinenteil ist bewegbar am anderen, den Dehnstab tragenden Maschinenteil geführt, wobei der freie Endbereich des Dehnstabs vom feststehenden Haltebereich für eine Werkzeugaufnahme wegweist.

Das Dehnrohr ist zweckmäßigerweise im Endbereich des Flüssigkeitskreislaufs angeordnet, damit eine Anpassung der Flüssigkeitstemperatur an die Temperaturen der verschiedenen Bereiche stattgefunden hat, bevor die Flüssigkeit das Dehnrohr erreicht.

Drei Ausführungsbeispiele der Erfindung sind in der Zeichnung dargestellt und in der nachfolgenden Beschreibung näher erläutert. Es zeigen:

Fig. 1 eine Fräsmaschine mit einem am Ständer befestigten Dehnrohr, das die Leseeinrichtung trägt, als erstes Ausführungsbeispiel der Erfindung,

Fig. 2 eine Fräsmaschine in einer Teilansicht, bei der der Spindelschlitten das mit einem Maßstab verbundene Dehnrohr trägt, als zweites Ausführungsbeispiel der Erfindung und

Fig. 3 einen Horizontal schnitt durch den Spindelschlitten gemäß Fig. 2 mit einer Draufsicht auf den Dehnstab und den Maßstab und

Fig. 4 eine Bohr- und Fräsmaschine mit horizontaler Arbeitsspindel und mit an zwei Schlittenführungen angebrachten Kompensationseinrichtungen als drittes Ausführungsbeispiel der Erfindung.

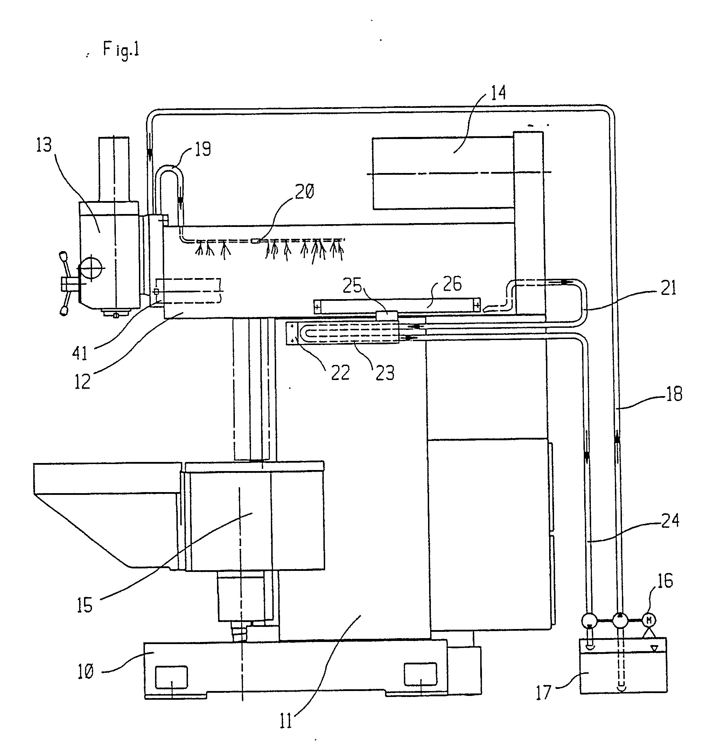

Bei der in Fig. 1 dargestellten Fräsmaschine ist an einem mit einem Ständerfuß 10 versehenen Ständer 11 ein Spindelschlitten 12 horizontal verschiebbar geführt. An seinem vorderen, linken Ende trägt der Spindelschlitten 12 einen abschwenkbaren Fräskopf 13, in den ein nicht dargestelltes Fräswerkzeug einsetzbar ist. Am rechten hinteren Ende ist oberhalb des Spindelschlittens 12 ein Antriebsmotor 14 angebracht, der über ein im Spindelschlitten 12 angeordnetes, nicht dargestelltes Getriebe eine Vertikalfrässpindel im Fräskopf 13 oder nach Abschwenken des Fräskopfes eine Horizontalfrässpindel 41 antreibt. Die Vorschubbewegung des Spindelschlittens 12 sowie die vertikale und horizontale Bewegung eines Vertikal-Horizontal-Kreuzschlittens 15 wird durch nicht dargestellte, stufenlos regelbare Vorschubmotoren für jede Achse und eine entsprechende, ebenfalls nicht dargestellte Steuervorrichtung (CNC-Steuerung) veranlaßt. Der Kreuzschlitten 15 ist dabei am Ständer 11 vertikal geführt. Die Fräsmaschine, im vorliegenden Falle der Spindelschlitten 12, ist mit einer Umlauf-Schmieranlage ausgerüstet. Eine Pumpvorrichtung 16 fördert Schmieröl von einem Ölbehälter 17 über eine Leitung 18 zum Fräskopf 13 und von dort über eine Leitung 19 zu einem Schmierölverteiler 20 im Spindelschlitten 12. Von dort aus wird das Schmieröl durch Sprühen od.dgl. den nicht dargestellten Getriebeteilen oder sonstigen bewegten Teilen zugeführt und sammelt sich im unteren Bereich dieses Spindelschlittens 12. Von dort aus verläuft ein Saugrohr 21 zu einem Dehnstab 22, der einen U-förmigen Schmierölkanal 23 aufweist, wobei eine weitere Leitung 24 vom Dehnstab 22 zur Pumpvorrichtung 16 und damit zum Ölbehälter 17 zurück verläuft.

Die Pumpvorrichtung 16 ist beispielsweise als Zweikreis-Zahnradpumpe ausgebildet und dient sowohl zur Zuführung von Schmieröl zum Schmierölverteiler 20 als auch zum Absaugen des Schmieröls vom Spindelschlitten 12 über den Dehnstab 22 zum Ölbehälter 17.

Durch das Schmieröl wird zum einen eine Schmierung der bewegten Teile und zum anderen eine gleichmäßige Wärmeverteilung und eine gleiche Temperatur im Fräskopf und Spindelschlitten erreicht. Das Öl wird dabei erwärmt und hat sowohl in der Aufwärmphase als auch im Gleichgewichtszustand immer dieselbe Temperatur wie der Fräskopf bzw. der Spindelschlitten. Daher wird auch der Dehnstab 22 auf dieser Temperatur gehalten, wobei infolge des schnellen Fließens des Schmieröls eine sehr schnelle Temperaturanpassung innerhalb von wenigen Sekunden möglich ist. Da sich besonders stark erhitzende Teile stärker gekühlt werden müssen, sind dort die besprühte Fläche, die Sprühmenge und/oder die Fläche oder die Länge von Kühlleitungen besonders groß, um die Temperatur möglichst gleichmäßig zu verteilen, wobei die Schmieröltemperatur dann eine sehr gute Mitteltemperatur über die verschiedenen Bereiche mit geringfügigen Temperaturunterschieden erhält.

Der Dehnstab 22 besteht aus einem Material mit hohem Wärmeausdehnungskoeffizienten, beispielsweise aus Aluminium oder einer Aluminiumlegierung, und ist mit seinem linken Endbereich am Ständer 11 fixiert. An seinem freien Ende befinden sich die Anschlüsse für das Saugrohr 21 und die Leitung 24. Weiterhin ist dort eine Leseeinrichtung 25 für einen Maßstab 26 angebracht, der in Längsrichtung des Spindelschlittens 12 an diesem befestigt ist. Derartige Maßstäbe und entsprechende Leseeinrichtungen sind beispielsweise aus dem eingangs angegebenen Stand der Technik bekannt und dienen primär zur Positionierung des Spindelschlittens 12, z.B. zum manuellen oder programmgesteuerten Einstellen der Position des Spindelschlittens 12 relativ zum Ständer 11.

Infolge der Erwärmung des Spindelschlittens 12 durch die sich bewegenden Teile erfolgt eine Längenausdehnung, die das nicht dargestellte Fräswerkzeug nach links verschiebt. Hierbei können je nach Maschinengröße Fehler in der Größenordnung bis zu 0,1 mm und mehr auftreten. Die entsprechende Erwärmung des Dehnstabs 22 führt zu einer entsprechenden Verschiebung der Leseeinrichtung 25 nach rechts, so daß die Längenausdehnung des Spindelschlittens 12 kompensiert wird. Das Material und die Dimensionierung des Dehnstabs 22 müssen selbstverständlich so gewählt werden, daß eine exakte und vollständige Kompensierung stattfindet, das heißt, die Längenausdehnung des Spindelschlittens 12 muß der Längenausdehnung des Dehnstabs 12 bezüglich der Meßstelle entsprechen.

Bekannte Umlauf-Schmieranlagen weisen noch einen Wärmetauscher auf, der bei der dargestellten Fräsmaschine selbstverständlich ebenfalls vorgesehen sein kann, jedoch im Hinblick auf die Kompensation durch den Dehnstab 22 hier auch entfallen kann.

Entsprechende Kompensationsvorrichtungen können selbstverständlich auch an anderen, relativ zueinander bewegbaren Maschinenteilen vorgesehen sein, beispielsweise zwischen dem Spindelschlitten 12 und dem vertikal verschiebbaren Kreuzschlitten 15 und zwischen dem horizontal verschiebbaren Bereich dieses Kreuzschlittens 15 und dem nicht horizontal verschiebbaren Bereich. Die jeweiligen, vom Schmieröl durchflossenen Dehnstäbe können dabei in Reihe oder parallelgeschaltet werden. Ob Kompensationsvorrichtungen erforderlich sind, hängt nicht zuletzt davon ab, ob die betreffenden Teile einer besonderen Erwärmung unterliegen. Ist die Erwärmung sehr unterschiedlich, können für die Kompensation selbstverständlich auch verschiedene Kreisläufe vorgesehen sein.

Anstelle des U-förmigen Schmierölkanals 23 in den Stab 22 kann dieser Dehnstab auch als U-förmig gebogenes Rohr ausgebildet sein, oder ein derartiges Rohr ist fest mit einem massiven Dehnstab verbunden, beispielsweise verschweißt.

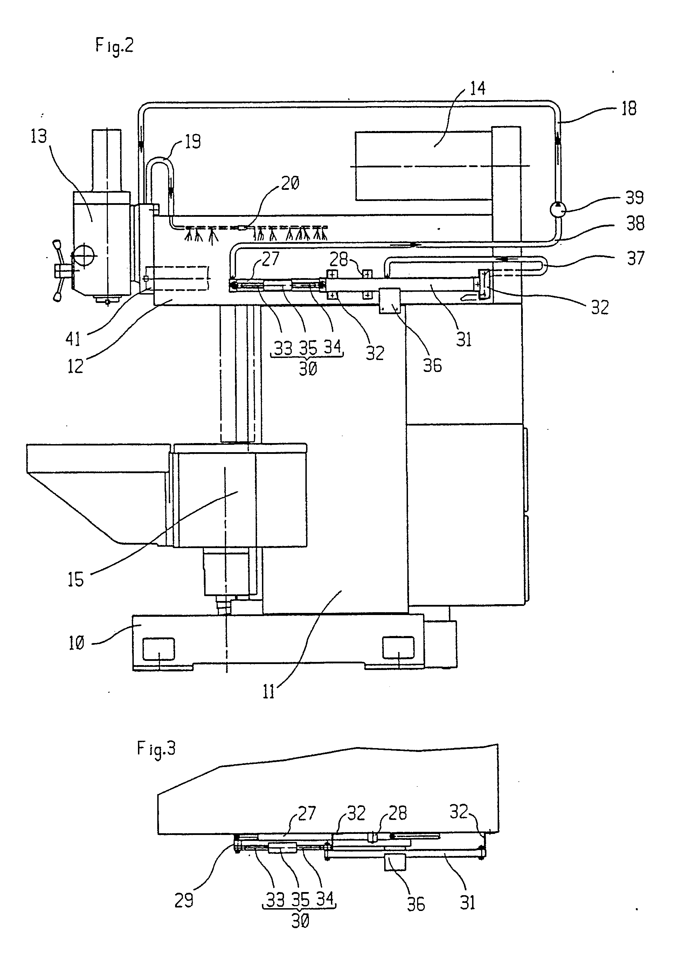

Bei dem in den Fig. 2 und 3 dargestellten zweiten Ausführungsbeispiel einer Kompensationvorrichtung an einer Fräsmaschine sind gleiche oder gleich wirkende Bauteile oder Baugruppen mit denselben Bezugszeichen versehen und nicht nochmals beschrieben. Im Unterschied zum ersten Ausführungsbeispiel ist nunmehr ein Dehnstab 27 am Spindelschlitten 12 mittels einer Befestigungsvorrichtung 28 fixiert, wobei sich das freie Ende dieses Dehnstabs 27 nach links zum Fräskopf 13 hin erstreckt. An diesem freien Ende des Dehnstabs 27 ist über ein Abstandselement 29 eine Justiereinrichtung 30 befestigt, deren anderes Ende mit einem Maßstab 31 verbunden ist. Dieser Maßstab 31 ist über zwei abgewinkelte, elastische Halterungen 32 ebenfalls am Spindelschlitten 12 befestigt, wobei der Maßstab 31 insgesamt rechts vom Dehnstab 27 angeordnet ist. Dies ist jedoch nicht wesentlich, da sich der Maßstab 31 prinzipiell auch links oder in gleicher Höhe des Dehnstabs 27 befinden könnte. Die Justiereinrichtung 30 besteht aus zwei Gewindebolzen 33, 34 mit entgegengesetzter Gewinderichtung, deren zueinander gewandte Enden über ein Gewinderohr 35 mit entsprechenden Innengewinden verbunden sind. Durch Drehen des Gewinderohrs 25 können die Gewindebolzen 33, 34 zueinander oder auseinander bewegt werden, wobei sich entsprechend der Dehnstab 27 und der Meßstab 31 zueinander oder auseinander bewegen, um eine Justierung herbeiführen zu können.

Eine am Ständer 11 befestigte Leseeinrichtung 36 erstreckt sich zum Maßstab 31 hin, um eine entsprechende Positionssteuerung bewirken zu können.

Bei diesem Ausführungsbeispiel ist eine kleinere Umlauf-Schmieranlage dargestellt, bei der Öl vom Innenraum des Spindelschlittens 12 über ein Saugrohr 37 zum Dehnstab 27, durch diesen hindurch und über eine Leitung 38 zu einer Pumpvorrichtung 39 und von dort aus über den Vertikal-Fräskopf 13 zum Schmierölverteiler 20 gepumpt wird. Der Vertikal-Fräskopf kann gegebenenfalls auch vom Schmieröl-Kreislauf ausgeschlossen werden.

Bei einer Erwärmung des Spindelschlittens 12 und des Fräskopfes 13 würde sich auch bei diesem Ausführungsbeispiel wiederum ein Fräswerkzeug nach links verschieben. Gleichzeitig verschiebt sich das freie Ende des Dehnstabs 27 und damit der Maßstab 31 ebenfalls nach links um denselben Betrag, so daß über die Steuervorrichtung (CNC-Steuerung) des Spindelschlittens 12 dieser wiederum nach rechts verschoben wird, bis die entsprechende Marke wieder die Leseeinrichtung 36 erreicht.

Um Temperatureinflüsse von außen auszuschalten, kann der Dehnstab 27 eine Isolierung 40 aufweisen, die sich vorzugsweise über alle Seiten erstreckt, wobei im Einzelfall die zum Spindelschlitten hinweisende Seite auch frei bleiben kann, wenn der Spindelschlitten an dieser Stelle eine entsprechende Temperatur aufweist. Zwischen dem Stab 27 und dem daran anliegenden Spindelschlitten 12 ist ein Dauerschmiermittel angebracht, das die Wärmeausdehnung des Dehnstabs nicht beeinträchtigt. Selbstverständlich kann der Dehnstab auch freitragend angeordnet sein, wobei dann an seinem freien Ende zur besseren Lagestabilität ein Haltekörper mit einer Gleitöffnung vorgesehen sein kann.

Alternativ zu den dargestellten Ausführungsbeispielen könnte selbstverständlich auch in Umkehrung des in Fig. 1 dargestellten ersten Ausführungsbeispiels der Dehnstab 22 am Spindelschitten 12 und der Maßstab 26 am Ständer 11 angeordnet sein. In diesem Falle würde das freie Ende des Dehnstabs 22 allerdings zum Fräskopf 13 hinweisen. Ebenfalls ist es möglich, in Umkehrung des in den Fig. 2 und 3 dargestellten zweiten Ausführungsbeispiels den Dehnstab 27 und den Maßstab 31 am Ständer 11 und die Leseeinrichtung 36 am Spindelschlitten 12 anzubringen. In diesem Falle müßte der Dehnstab 27 wiederum umgedreht werden, so daß sein freies Ende vom Fräskopf 13 wegweist.

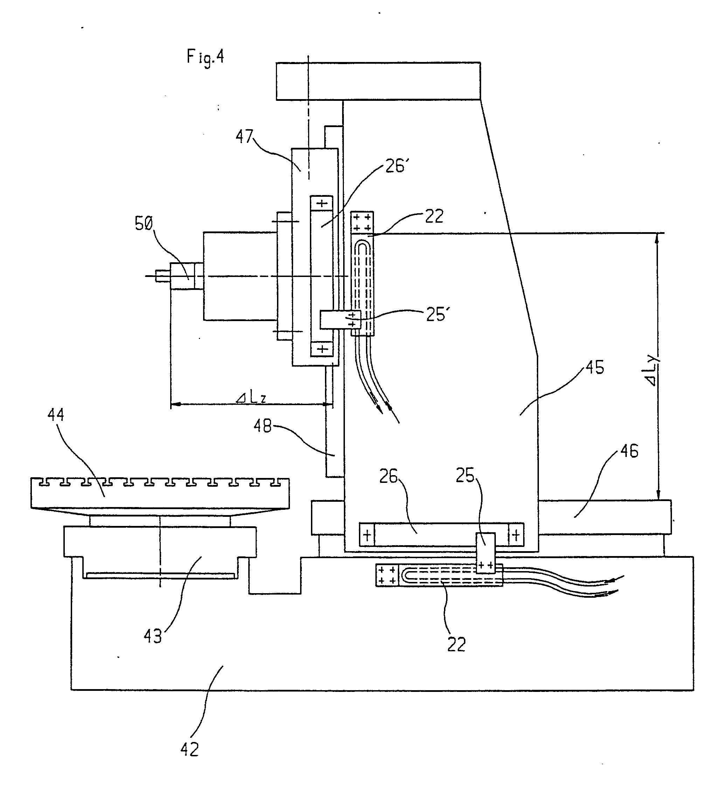

Als drittes Ausführungsbeispiel der Erfindung ist in Fig. 4 eine Bohr- und Fräsmaschine mit zwei Kompensationseinrichtungen dargestellt. Auf einem Grundgestell 42 ist ein Aufspanntisch 44 in der X-Achse mittels einer Führung 43 verschiebbar, während ein Ständer 45 mittels einer Führung 46 in der Z-Achse verschiebbar geführt ist. An diesem Ständer 45 ist ein Vertikal-Spindelschlitten 47 in der Y-Achse mittels einer Vertikalführung 48 verschiebbar geführt. Am Spindelschlitten 47 ist eine Werkzeugaufnahme 50 mit horizontaler Achse angeordnet.

Entsprechend dem ersten Ausführungsbeispiel ist der öldurchflossene Dehnstab 22 am Grundgestell 42 angeordnet und trägt eine Leseeinrichtung 25, die die Einteilung des am Ständer 45 angebrachten Maßstabs 26 abgreift. Eine zweite, entsprechende Kompensationseinrichtung ist in der vertikalen Y-Richtung angeordnet, wobei ein Maßstab 26' am Spindelschlitten 47 angeordnet ist, dessen Markierungen von einer Leseeinrichtung 25' an einem Dehnstab 22' erfaßt werden. Dieser Dehnstab 22' ist in vertikaler Richtung am Ständer 45 angeordnet. Die Leitungsführung des Schmier- bzw. Kühlöles kann der der vorangegangenen Ausführungsbeispiele entsprechen. Wesentlich dabei ist jeweils, daß dieses Schmieröl jeweils denjenigen Maschinenteil durchströmt, dessen Längenänderung ausgeglichen werden soll, wobei der Dehnstab 22 bzw. 22$'$ dann jeweils vorzugsweise den Leitungen durch das zu kompensierende Maschinenteil nachgeschaltet ist. Längenänderungen im Bereich $\Delta Lz$ werden dabei von der Kompensationseinrichtung 22,25,26 kompensiert, während Längenänderungen im Bereich $\Delta Ly$ durch die Kompensationseinrichtung 22$'$,25$'$ und 26$'$ kompensiert werden.

Die beschriebenen Kompensationsvorrichtungen können selbstverständlich auch noch für weitere Arten von Fräsmaschinen oder andere Werkzeugmaschinen, wie Drehbänke, Hobelmaschinen, Bohrmaschinen od.dgl., in entsprechender Weise eingesetzt werden. So könnte beispielsweise eine derartige Kompensationsvorrichtung auch an einem ein Werkstück tragenden Kreuzschlitten angeordnet sein, der Bewegungen relativ zu einem starren Werkzeugkopf ausführt. Da durch die Temperaturanpassung des Dehnstabs über den Schmieröl-Kreislauf die Kompensationsvorrichtung nicht an dem Bereich angeordnet sein muß, dessen Längenausdehnung kompensiert werden soll, ist auch eine entfernte Anordnung möglich, wobei lediglich das Schmieröl oder Kühlöl zuvor den zu kompensierenden Bereich durchlaufen muß.

## Ansprüche

1. Vorrichtung zur Kompensation der Wärmeausdehnung in wenigstens einer Bewegungsrichtung an Werkzeugmaschinen, mit einem Maßstab an wenigstens einem Maschinenteil und einer Leseeinrichtung für den Maßstab an wenigstens einem weiteren Maschinenteil zur Erfassung der jeweiligen Relativposition der relativ zueinander bewegbaren Maschinenteile, wobei der Maßstab und/oder die Leseeinrichtung an einem in der Bewegungsrichtung verlaufenden Dehnstab mit hohem Wärmeausdehnungskoeffizienten befestigt ist, und mit Mitteln für den Wärmeübergang von der Werkzeugmaschine zum Dehnstab, dadurch gekennzeichnet, daß der eine Flüssigkeitsleitung (23) aufweisenden Dehnstab (22, 22$'$; 27) einen Teil eines Flüssigkeitskreislaufs der Werkzeugmaschine bildet, der insbesondere der Kreislauf der Umlaufschmierung ist.

2. Vorrichtung nach Anspruch 1, dadurch gekennzeichnet, daß der Kreislauf der Umlaufschmierung wenigstens durch diejenigen Bereiche der Werkzeugmaschine oder eines Maschinenteils (12; 13; 45; 47) geführt sind, die für die Wärmeausdehnung maßgeblich sind, vorzugsweise durch ein verfahrbares Getriebegehäuse (12; 45) und einen Fräskopf (13; 45).

3. Vorrichtung nach Anspruch 2, dadurch gekennzeichnet, daß der Kreislauf sich durch diese verschiedenen Bereiche jeweils mit Längen- und/oder Flächenanteilen erstreckt, die den jeweiligen Anteilen an der Wärmeausdehnung entsprechen.

4. Vorrichtung nach einem der vorhergehenden Ansprüche, dadurch gekennzeichnet, daß der Dehnstab (22; 22$'$; 27) einen Flüssigkeitskanal (23) aufweist oder als Rohr ausgebildet ist, wobei vorzugsweise die beiden Anschlüsse des Flüssigkeitskanals (23) an einem Ende des Dehnstabs (22, 22$'$) angeordnet sind.

5. Vorrichtung nach einem der vorhergehenden Ansprüche, dadurch gekennzeichnet, daß im Flüssigkeitskreislauf mehrere Dehnstäbe (22; 22$'$) verschiedener Kompensationseinrichtungen in Reihe oder parallelgeschaltet sind.

6. Vorrichtung nach einem der vorhergehenden Ansprüche, dadurch gekennzeichnet, daß der Dehnstab (22; 22$'$;27) mit einem seiner Endbereiche am feststehenden oder bewegbaren Maschinenteil (11; 12; 42; 45) verankert und der Maßstab (26; 26$'$; 31) oder die Leseeinrichtung (25; 25$'$, 36) insbesondere über eine Justiereinrichtung (30) am anderen Endbereich des Dehnstabs (22; 22$'$; 27) befestigt ist.

7. Vorrichtung nach Anspruch 6, dadurch gekennzeichnet, daß der Dehnstab am freien Ende verschiebbar in einer Halterung geführt ist.

8. Vorrichtung nach Anspruch 6 oder 7, dadurch gekennzeichnet, daß der Dehnstab (22, 22$'$, 27) vom Maschinengehäuse (11; 12; 42; 45) beabstandet angeordnet oder gleitend daran geführt ist, wobei ein Dauerschmierstoff dazwischen angeordnet ist.

9. Vorrichtung nach Anspruch 8, dadurch gekennzeichnet, daß der Dehnstab (22; 22$'$; 27) wenigstens an seinen nicht am Maschinengehäuse (12; 42; 45) anliegenden Seiten wärmeisoliert ist.

10. Vorrichtung nach einem der Ansprüche 6 bis 9, dadurch gekennzeichnet, daß das eine Werkzeugaufnahme (41) aufweisende bewegbare Maschinenteil (12) oder das eine Werkstückaufnahme aufweisende bewegbare Maschinenteil den Dehnstab (27) trägt, dessen freier Endbereich zur Werkzeugaufnahme oder zum feststehenden Haltebereich für eine Werkzeugaufnahme hinweist.

11. Vorrichtung nach einem der Ansprüche 6 bis 9, dadurch ge kennzeichnet, daß das eine Werkzeugaufnahme (41; 50) aufweisende Maschinenteil (12; 47) oder das eine Werkstückaufnahme aufweisende Maschinenteil bewegbar am anderen, den Dehnstab (22, 22$'$) tragenden Maschinenteil (11; 45 bzw. 42) geführt ist, wobei der freie Endbereich des Dehnstabs (22; 22$'$) von der Werkzeugaufnahme oder vom feststehenden Haltebereich für eine Werkzeugaufnahme wegweist.

12. Vorrichtung nach einem der vorhergehenden Ansprüche, dadurch gekennzeichnet, daß der Dehnstab (22; 22$'$; 27) im Endbereich des Flüssigkeitskreislaufs angeordnet und insbesondere an der Saugleitung (24; 38) einer Umwälzpumpe (16; 39) für den Flüssigkeitskreislauf angeschlossen ist.

Fig.1

Fig.2

Fig.3

Fig.4

# EUROPÄISCHER RECHERCHENBERICHT

## EINSCHLÄGIGE DOKUMENTE

EP 90110688.0

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | <u>DD - A - 200 350/3</u><br>(LIPPOLD)<br> * Anspruch 2; Fig. * | 1 | B 23 Q 23/00 |
| A | | 2 | |
| Y | <u>DE - A1 - 3 309 722</u><br>(CIMA S.P.A)<br> * Fig. 1,2 *<br>-- | 1 | |
| A | <u>DE - A - 2 249 936</u><br>(LUDWIGSBURGER MASCHINENBAU GMBH)<br> * Seite 13, Zeile 27 - Seite 14, Zeile 8; Ansprüche 12,13; Fig. 1 *<br>-- | 1 | |
| A | <u>DE - C1 - 3 722 518</u><br>(O. DÖRRIES GMBH)<br> * Ansprüche 1,2 *<br>-- | 1 | |
| A | <u>DE - C1 - 3 627 546</u><br>(MAHO AG)<br> * Fig. *<br>-- | 10 | RECHERCHIERTE SACHGEBIETE (Int Cl⁵) |
| A | <u>DE - A - 1 627 038</u><br>(WERKZEUGMASCHINENFABRIK GILDEMEISTER & CO AG)<br>---- | | B 23 Q 11/00<br>B 23 Q 15/00<br>B 23 Q 23/00<br>G 01 B  3/00 |

Der vorliegende Recherchenbericht wurde für alle Patentansprüche erstellt.

| Recherchenort<br>WIEN | Abschlußdatum der Recherche<br>22-10-1990 | Prüfer<br>NIMMERRICHTER |
|---|---|---|